# EUROPEAN PATENT APPLICATION

(11) **EP 2 471 865 A1**
(43) Date of publication of application: **04.07.2012**
(21) Application number: 11193093.9
(22) Date of filing: 12.12.2011
(51) Int. Cl.: C08L 69/00, C08L 83/10

(54) **Polycarbonate resin composition having good mold release properties and good appearance and molded article using the same**

(30) Priority: 28.12.2010 KR 20100137105
(71) Applicant: Cheil Industries Inc., Gyeongsangbuk-do 730-710 (KR)
(72) Inventor: Lee, Jin Seong, Uiwang-si, Gyeonggi-do (KR); Yoon, Jong Tae, Uiwang-si, Gyeonggi-do (KR); Nam, Yun Ku, Uiwang-si, Gyeonggi-do (KR); Kang, Min Jung, Uiwang-si, Gyeonggi-do (KR); Shin, Seung Shik, Uiwang-si, Gyeonggi-do (KR); Chin, Kyuong Sik, Uiwang-si, Gyeonggi-do (KR)
(74) Representative: Bublak, Wolfgang

(57) **Abstract**

The present invention discloses a polycarbonate resin composition which includes a polycarbonate resin (A), a polycarbonate-polysiloxane copolymer (B), and a siloxane copolyester (C), wherein the siloxane copolyester (C) is present in an amount of 0.1 to 6 wt% based on the total amount of the composition. The composition has excellent mold release properties and appearance.

## Description

The present invention relates to a polycarbonate resin composition having good mold release properties and good appearance and a molded article using the same. More particularly, the present invention relates to a polycarbonate resin composition employing siloxane copolyester to improve mold release properties and appearance, and a molded article using the same.

In PC/ABS alloys, polycarbonate generally improves impact strength and heat resistance, and ABS enhances processibility and chemical resistance. Thus, PC/ABS alloys are used for various purposes due to excellent physical properties as compared with ABS and cost efficiency as compared with polycarbonate. In particular, for application to housings of electronic goods, resins are required to have flame retardancy and excellent injection molding efficiency. Further, resins need to be readily injection-molded in molds with complicated shapes due to various shapes of product designs.

Recently, polycarbonate-PDMS copolymers are used to secure excellent physical properties and workability as compared with polycarbonate.

Generally, an easy method of improving injection mold release property of resins is to use various kinds of release agents. Such release agents are divided into an organic compound type and a silicon oil type.

Representative organic compound release agents may include stearmide, oleamide, and the like. However, since these organic compound release agents have problems, such as decrease in physical properties and deposition in a mold, with increase in content thereof, sufficient release effects cannot be secured. Particularly, such problems are serious in molding of PC/AB S due to high process temperature.

Korean Patent Publication No. 2010-0040946 discloses an organic compound release agent. However, when an insufficient amount of this release agent is used, desired mold release properties cannot be secured. On the contrary, when the release agent is excessive, physical properties are deteriorated.

A representative silicone oil release agent is PDMS, which has considerably excellent mold release properties with a small amount. However, PDMS is deposited in a mold due to improper compatibility with resin and generates a pearl mark due to a difference in refractive index from the resin.

Korean Patent Publication No. 2003-0060973 discloses a method employing silicone oil including a phenyl group. The silicone oil has excellent appearance (with respect to pearl mark) but exhibits relatively reduced mold release properties as compared with PDMS.

Therefore, there is a need to develop a material having excellent mold release properties, appearance and spiral flow, not decreasing physical properties and exhibiting superior flame retardancy.

The object of the present invention is to provide a polycarbonate resin composition having excellent mold release properties and appearance, exhibiting excellent spiral flow while maintaining transparency, and having superior property balance between flame retardancy, impact resistance, mold release properties, heat resistance, and appearance.

A further object of the present invention is the provision of a polycarbonate resin composition having excellent mold release properties and appearance. The polycarbonate resin composition includes a polycarbonate resin (A), a polycarbonate-polysiloxane copolymer (B), and a siloxane copolyester (C), wherein the siloxane copolyester (C) is present in an amount of 0.1 1 to 6 wt% based on the total amount of the composition.

The siloxane copolyester (C) may have a number average molecular weight (Mn) of 5,500 to 7,500 g/mol measured by gel permeation chromatography.

The siloxane copolyester (C) may be an ABA type block copolymer of a polyester block and a polysiloxane block.

The siloxane copolyester (C) may include 30 to 70 wt% of the polyester block and 30 to 70 wt% of the polysiloxane block, wherein the polyester may have a number average molecular weight of 1,000 to 3,000 g/mol measured by gel permeation chromatography.

The siloxane copolyester (C) may include a repeat unit represented by Formula 1: 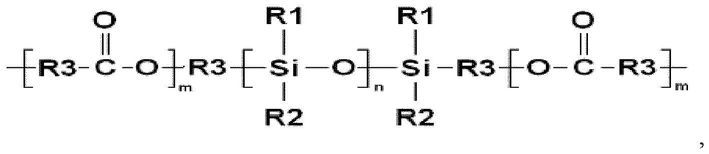 wherein R1 and R2 are the same or different and each are a substituted or unsubstituted C1 to C20 alkyl group, a substituted or unsubstituted C2 to C20 alkenyl group, a substitute or unsubstituted C2 to C20 alkynyl group, a substituted or unsubstituted C1 to C20 alkoxy group, a substituted or unsubstituted C3 to C30 cycloalkyl group, a substituted or unsubstituted C3 to C30 cycloalkenyl group, a substituted or unsubstituted C3 to C30 cycloalkynyl group, a substituted or unsubstituted C6 to C30 aryl group, a substituted or unsubstituted C6 to C30 aryloxy group, or NRR' (R and R' are the same or different and each are a hydrogen atom or a substituted or unsubstituted C1 to C20 alkyl group); R3 is C1 to C10 alkylene or C6 to C20 arylene; n is an integer from 5 to 50; and m is an integer from 5 to 30.

The composition may include 40 to 85 wt% of the polycarbonate resin (A), 10 to 55 wt% of the polycarbonate-polysiloxane copolymer (B), and 0.1 to 6 wt% of the siloxane copolyester (C).

The composition may further include an impact reinforcing agent.

The composition may further include a flame retardant.

The polycarbonate-polysiloxane copolymer (B) may include 1 to 99 wt% of the polycarbonate block and 1 to 99 wt% of the polysiloxane block.

The resin composition may further include at least one additive selected from the group consisting of impact reinforcing agents, flame retardants, anti-dripping agents, antimicrobials, heat stabilizers, antioxidants, release agents, photo-stabilizers, inorganic additives, surfactants, coupling agents, plasticizers, admixtures, stabilizers, lubricants, anti-static agents, toning agents, fire proofing agents, weather proofing agents, coloring agents, UV absorbents, UV blocking agents, fillers, nucleating agents, adhesion aids, and adhesives.

The polycarbonate resin composition may have a UL94 flammability rating of VO or more, measured on an 1 mm-thick specimen, and an impact strength of 35 kgfcm/cm or more, measured on a 1/8"-thick specimen by ASTM D1925.

Another objectof the present invention is the provision of a molded article obtainable from the polycarbonate resin composition.

The above and other aspects, features and advantages of the invention will become apparent from the following detailed description in conjunction with the accompanying drawing, in which:
Fig. 1 are pictures illustrating the best mold release properties and the worst mold release properties when a grille mold is used according to examples and comparative examples; and
Fig. 2 are pictures illustrating the best appearance and the worst appearance with respect to an extent to which pearl marks occur on a welded part according to examples and comparative examples.

Example embodiments will now be described in detail hereinafter with reference to the accompanying drawing; however, they may be embodied in different forms and should not be construed as limited to the embodiments set forth herein. Rather, these embodiments are provided so that this disclosure will be thorough and complete, and will fully convey the scope of the invention to those skilled in the art.

Unless otherwise indicated, the term "substitution" means that a hydrogen atom of a compound is substituted by a halogen atom, such as F, Cl, Br, and I, a hydroxyl group, a nitro group, a cyano group, an amino group, an azido group, an amidino group, a hydrazino group, a hydrazono group, a carbonyl group, a carbamyl group, a thiol group, an ester group, a carboxyl group or salt thereof, a sulfonic acid group or salt thereof, a phosphate group or salt thereof, a C1 to C20 alkyl group, a C2 to C20 alkenyl group, a C2 to C20 alkynyl group, a C1 to C20 alkoxy group, a C6 to C30 aryl group, a C6 to C30 aryloxy group, a C3 to C30 cycloalkyl group, a C3 to C30 cycloalkenyl group, a C3 to C30 cycloalkynyl group, or a substituent of a combination thereof.

A polycarbonate resin composition according to an aspect of the present invention includes a polycarbonate resin (A), a polycarbonate-polysiloxane copolymer (B), and a siloxane copolyester.

Hereinafter, each component will be described in detail.

### (A) Polycarbonate resin

The polycarbonate resin may be prepared by reaction of diphenols represented by Formula 2 with phosgene, halogen acid ester, carbonic acid ester, or a combination thereof: 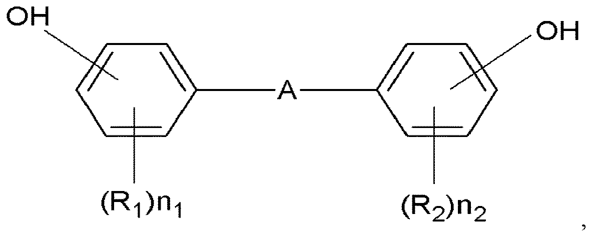 wherein A is a single bond and is a substituted or unsubstituted C1 to C30 linear or branched alkylene group, a substituted or unsubstituted C2 to C5 alkenylene group, a substituted or unsubstituted C2 to C5 alkylidene group, a substituted or unsubstituted C1 to C30 linear or branched haloalkylene group, a substituted or unsubstituted C5 to C6 cycloalkylene group, a substituted or unsubstituted C5 to C6 cycloalkenylene group, a substituted or unsubstituted C5 to C10 cycloalkylidene group, a substituted or unsubstituted C6 to C30 arylene group, a substituted or unsubstituted C1 to C20 linear or branched alkoxylene group, a halogen acid ester group, a carbonic acid ester group, CO, S, or SO₂ R₁ and R₂ are the same or different and each are a substituted or unsubstituted C1 1 to C30 alkyl group or a substituted or unsubstituted C6 to C30 aryl group; and n₁ and n₂ each are an integer from 0 to 4.

The polycarbonate resin may have a repeat unit obtained by combining at least two kinds of the diphenols represented by Formula 2. Examples of the diphenols may include hydroquinone, resorcinol, 4,4'-dihydroxy diphenyl, 2,2-bis(4-hydroxyphenyl)propane (bisphenol-A), 2,4-bis(4-hydroxyphenyl)-2-methylbutane, bis(4-hydroxyphenyl)methane, 1, 1 -bis(4-hydroxypehnyl)cyclohexane, 2,2-bis(3-chloro-4-hydroxyphenyl)propane, 2,2-bis(3,5-dimethyl-4-hydroxyphenyl)propane, 2,2-bis(3,5-dichloro-4-hydroxyphenyl)propane, 2,2-bis(3,5-dibromo-4-hydroxyphenyl)propane, bis(4-hydroxyphenyl)sulfoxide, bis(4-hydroxphenyl)ketone, and bis(4-hydroxyphenyl)ether. Here, 2,2-bis(4-hydroxyphenyl)propane, 2,2-bis(3-chloro-4-hydroxyphenyl)propane, or 1,1-bis(4-hydroxypehnyl)cyclohexane are preferably used, and 2,2-bis(4-hydroxyphenyl)propane is more preferably used.

The polycarbonate resin may have a weight average molecular weight of 10,000 to 200,000 g/mol measured by gel permeation chromatography. In one embodiment, the polycarbonate resin may have a weight average molecular weight of 15,000 to 80,000 g/mol, without being limited thereto.

The polycarbonate resin may be a mixture of copolymers prepared from at least two kinds of diphenols. Further, the polycarbonate resin may include a linear polycarbonate resin, a branched polycarbonate resin, and a polyester-carbonate copolymer resin.

Examples of the linear polycarbonate resin may include bisphenol-A polycarbonate resins. Examples of the branched polycarbonate resin may include compounds prepared by reaction of a multifunctional aromatic compound, such as trimelitic anhydride and trimelitic acid, with diphenols and carbonate. The multifunctional aromatic compound may be present in an amount of 0.05 to 2 mol% based on the total amount of the branched polycarbonate resin. Examples of the polyester-carbonate copolymer resin may include compounds prepared by reaction of a bifunctional carboxylic acid with diphenols and carbonate. Examples of the carbonate may include diaryl carbonate, such as diphenyl carbonate, and ethylene carbonate.

The polycarbonate resin may have a melt index (MI) of 3 to 120 g/10 min at 300°C and 1.2 kgf, preferably 10 to 60 g/10 min measured by ISO1133. Within this range, excellent mechanical properties and injection fluidity can be obtained. In one embodiment, the polycarbonate resin may have an MI of 12 to 55 g/10 min, preferably 15 to 35 g/10 min.

The polycarbonate resin may be present in an amount of 40 to 85 wt%, preferably 45 to 80 wt% based on 100 wt% of a base resin. Within this range, excellent property balance between impact strength, heat resistance, and processibility can be obtained. In one embodiment, the amount may be 50 to 75 wt%.

### (B) Polycarbonate-polysiloxane copolymer

The polycarbonate-polysiloxane copolymer includes a polycarbonate block and a polysiloxane block.

The polycarbonate block may include a structural unit derived from the polycarbonate resin (A).

The polysiloxane block may include a structural unit represented by Formula 3: 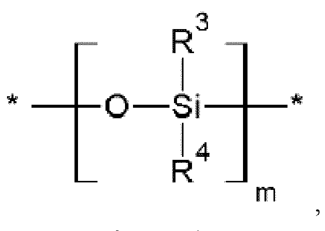 wherein R³ and R⁴ may be the same or different and each are a hydrogen atom, a substituted or unsubstituted C1 to C20 alkyl group, a substituted or unsubstituted C2 to C20 alkenyl group, a substituted or unsubstituted C2 to C20 alkynyl group, a substituted or unsubstituted C1 to C20 alkoxy group, a substituted or unsubstituted C3 to C30 cycloalkyl group, a substituted or unsubstituted C3 to C30 cycloalkenyl group, a substituted or unsubstituted C3 to C30 cycloalkynyl group, a substituted or unsubstituted C6 to C30 aryl group, a substituted or unsubstituted C6 to C30 aryloxy group, or NRR' (R and R' are the same or different and each are a hydrogen atom or a substituted or unsubstituted C1 to C20 alkyl group, and 2 ≤ m<10,000).

In Formula 3, m may be in the range from 2 to 10,000. In one embodiment, m may be in the range from 2 to 1,000. Within this range, excellent impact resistance can be obtained and proper viscosity can be maintained, providing favorable conditions for extrusion. Specifically, m may be 10 to 100, preferably 25 to 80.

The polycarbonate-polysiloxane copolymer may include 1 to 99 wt% of the polycarbonate block and 1 to 99 wt% of the polysiloxane block. In one embodiment, the polycarbonate-polysiloxane copolymer may include 40 to 80 wt% of the polycarbonate block and 20 to 60 wt% of the polysiloxane block. Within this range, excellent impact resistance can be obtained. In another embodiment, the polycarbonate-polysiloxane copolymer may include 80 to 95 wt% of the polycarbonate block and 5 to 20 wt% of the polysiloxane block.

The polycarbonate-polysiloxane copolymer may have a weight average molecular weight of 10,000 to 30,000 g/mol, specifically 15,000 to 22,000 g/mol measured by gel permeation chromatography. Within this range, excellent impact resistance can be obtained.

The polycarbonate-polysiloxane copolymer may have an MI of 3 to 100 g/10 min at 300°C and 1.2 kgf, preferably 10 to 70 g/10 min measured by ISO1133. Within this range, excellent mechanical properties and injection fluidity can be obtained. Preferably, the polycarbonate-polysiloxane copolymer may have a higher MI than the polycarbonate resin (A).

The polycarbonate-polysiloxane copolymer may be present in an amount of 10 to 55 wt%, preferably 15 to 50 wt% based on 100 wt% of the base resin. Within this range, excellent property balance between impact strength, heat resistance, and processibility can be obtained. Specifically, the amount may be 20 to 45 wt%.

### (C) Siloxane copolyester

The siloxane copolyester improves mold release properties and appearance. When the siloxane copolyester is used together with the polycarbonate-polysiloxane copolymer (B), desired effects can be obtained.

The siloxane copolyester may have a number average molecular weight of 5,500 to 7,500 g/mol, preferably 6,000 to 7,000 g/mol. Further, polyester of the siloxane coplyester may have a number average molecular weight of 1,000 to 3,000 g/mol, preferably 1,500 to 2,500 g/mol. Within this range, fluidity and mold release properties can be improved while maintaining excellent compatibility and mechanical properties.

The siloxane copolyester (C) may be an ABA type block copolymer of a polyester block and a polysiloxane block. In one embodiment, the siloxane copolyester (C) may include 30 to 70 wt% of the polyester block and 30 to 70 wt% of the polysiloxane block. Within this range, excellent fluidity, mold release properties, and property balance can be obtained.

In one embodiment, the siloxane copolyester (C) may include a repeat unit represented by Formula 1: 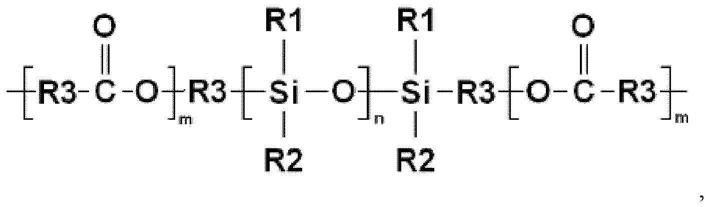 wherein R1 and R2 are the same or different and each are a substituted or unsubstituted C1 to C20 alkyl group, a substituted or unsubstituted C2 to C20 alkenyl group, a substituted or unsubstituted C2 to C20 alkynyl group, a substituted or unsubstituted C1 to C20 alkoxy group, a substituted or unsubstituted C3 to C30 cycloalkyl group, a substituted or unsubstituted C3 to C30 cycloalkenyl group, a substituted or unsubstituted C3 to C30 cycloalkynyl group, a substituted or unsubstituted C6 to C30 aryl group, a substituted or unsubstituted C6 to C30 aryloxy group, or NRR' (R and R' are the same or different and each are a hydrogen atom or a substituted or unsubstituted C1 to C20 alkyl group); R3 is C1 to C10 alkylene or C6 to C20 arylene; n is an integer from 5 to 50; and m is an integer from 5 to 30.

In one embodiment, the siloxane copolyester (C) may be prepared by polymerization of siloxane and caprolactam.

Alternatively, the siloxane copolyester (C) may be prepared by polymerization of siloxane, diol, and dicarboxylic acid.

The siloxane copolyester (C) may be present in an amount of 0.1 to 6 wt% based on 100 wt% of the base resin. When the amount of the siloxane copolyester (C) is less than 0.1 wt%, mold release properties and appearance can be deteriorated. When the amount of the siloxane copolyester (C) is more than 6 wt%, flame retardancy and impact strength can be deteriorated. Specifically, the siloxane copolyester (C) may be present in an amount of 0.1 to 5 wt%.

The polycarbonate resin composition may further include an impact reinforcing agent to improve impact resistance.

In one embodiment, the impact reinforcing agent may have a core-shell structure.

The impact reinforcing agent may be a rubber-modified graft copolymer or an olefin copolymer.

The rubber-modified graft copolymer may be prepared by graft-polymerization of a rubber polymer with a graft-copolymerizble monomer, and rubber of the rubber-modified graft copolymer may be present in an amount of 20 to 80 wt%. The rubber polymer may include at least one selected from the group consisting of diene rubber, acrylate rubber, and silicone rubber. Examples of the diene rubber may include butadiene and isoprene. Examples of the acrylate rubber may include monomers, such as methyl acrylate, ethyl acrylate, n-propyl acrylate, n-butyl acrylate, 2-ethylhexyl acrylate, hexyl acrylate, 2-ethylhexyl methacrylate, and the like. The silicone rubber may be prepared from cyclosiloxanes. Examples of the cyclosiloxanes may include hexamethyl cyclotrisiloxane, octamethyl cyclotetrasiloxane, decamethyl cyclopentasiloxane, dodecamethyl cyclohexasiloxane, trimethyltriphenyl cyclotrisiloxane, tetramethyltetraphenyl cyclotetrasiloxane, octaphenyl cyclotetrasiloxane, and mixtures thereof. In addition, polyolefin rubbers, such as ethylene/propylene rubber and ethylene-propylene-diene terpolymer (EPDM), may be used.

The rubber may have a average diameter of 50 to 500 nm, preferably 75 to 350 nm measured by Malvern Mastersizer S Ver.2.14. Within this range, balance between transparency and impact strength of the resin can be maintained.

Examples of the monomer graft-copolymerizable with the rubber polymer may include, without being limited to, styrene monomers, such as styrene, α-methylstyrene, and alkyl-substituted styrene; nitrile monomers, such as acrylonitrile and methacrylonitrile; (meth)acrylate monomers, such as methyl methacrylate and methyl acrylate; acid anhydrides, such as maleic anhydride; and alkyl or phenyl nucleus substituted maleimide, which may be used alone or as mixtures.

In one embodiment, the impact reinforcing agent may be present in an amount of 15 wt% or less, preferably 0.5 to 10 wt%, and more preferably 1 to 7 wt% based on the total amount of the resin composition.

The resin composition may further include a flame retardant to improve flame retardancy. The flame retardant may include phosphorus flame retardants, halogenated flame retardants, or mixtures thereof, without being limited thereto. Specifically, phosphorus flame retardants may be used.

The phosphorus flame retardants refer to flame retardants containing phosphorus generally used in the art, for example, red phosphorus, phosphate, phosphonate, phosphinate, phosphine oxide, phosphazene, and metal salts thereof, without being limited thereto.

The halogenated flame retardants may include any halogen compound functioning as a flame retardant. Examples of the halogenated flame retardants may include commercially available halogenated flame retardants, such as decabromodiphenyl ether, decabromodiphenyl ethane, tetrabromobisphenol-A, tetrabromobisphenol-A epoxy oligomers, octabromotrimethylphenyl indan, ethylene-bis(tetrabromophthalimide), tris(tribromophenol)triazine, brominated polystyrene, and the like. Specifically, the halogenated flame retardants may include halogen compounds melted at ordinary process temperatures, particularly halogen compounds having a melting point or softening point of 250°C or less.

The flame retardant may be present in an amount of 20 wt% or less, preferably 1 to 15 wt% based on the total amount of the composition. Within this range, excellent property balance between flame retardancy and impact strength can be obtained.

The polycarbonate resin composition may further include at least one additive selected from the group consisting of impact reinforcing agents, flame retardants, anti-dripping agents, antimicrobial agents, heat stabilizers, antioxidants, release agents, photo-stabilizers, inorganic additives, surfactants, coupling agents, plasticizers, admixtures, stabilizers, lubricants, anti-static agents, a toning agent, a fireproofing agent, a weatherproofing agent, coloring agents, UV absorbents, UV blocking agents, fillers, nucleating agents, adhesion aids, and adhesives.

An example of the anti-dripping agent may include polytetrafluoroethylene terephthalate, particularly polytetrafluoroethylene terephthalate capsulated with an aromatic vinyl resin. The anti-dripping agent may be present in an amount of 1.5 wt% or less, preferably 1 wt% or less, and more preferably 0.8 wt% or less based on the total amount of the composition. Within this range, balance between transparency and anti-dripping properties can be obtained.

Examples of the antioxidants may include phenol antioxidants, phosphite antioxidants, thioether antioxidants, or amine antioxidants.

Examples of the release agents may include fluorine containing polymers, silicone oils, metal salts of stearic acid, metal salts of montanic acid, montanic acid ester waxes, or polyethylene waxes.

Examples of the weatherproofing agents may include benzophenone or amine weather proof agents, and examples of the coloring agent may include dyes or pigments.

Examples of the UV blocking agents may include titanium oxide (TiO₂) or carbon black. The carbon black may be a conductive carbon black, such as graphitized carbon, furnace black, acetylene black and ketchen black, without being limited thereto.

Examples of the fillers may include glass fiber, carbon fiber, silica, mica, alumina, clay, calcium carbonate, calcium sulfate, or glass beads.

Examples of the nucleating agents may include talc and clay.

The additives may be properly added so long as properties of the polycarbonate resin composition are not deteriorated. In one embodiment, the additives may be present in an amount of 40 wt% or less, preferably 0.1 to 30 wt% in the polycarbonate resin composition.

The polycarbonate resin composition may have a UL94 flammability rating of VO or more, measured on an 1 mm-thick specimen, and an impact strength of 35 kgfcm/cm or more, e.g., 36 to 90 kgfcm/cm, measured on a 1/8"-thick specimen by ASTM D1925.

The polycarbonate resin composition may be prepared by any known method of preparing a resin composition. For example, the above components and other additives are mixed, subjected to melt extrusion in an extruder, and formed into pellets.

Another aspect of the present invention provides a molded article using the polycarbonate resin composition. That is, the polycarbonate resin composition may be formed into molded articles via various processes, such as injection molding, blow molding, extrusion molding, and heat molding. In particular, the composition is useful for molded articles produced via molding and mold-releasing, e.g., electric and electronic components and automobile components.

Hereinafter, the constitution and functions of the present invention will be explained in more detail with reference to the following examples. These examples are provided for illustrative purposes only and are not to be in any way construed as limiting the present invention.

### Examples

Details of components used in Examples and Comparative Examples are described as follows.
(A) Polycarbonate resin: Polycarbonate having MI of 20 g/10 min (300°C, 1.2 kgf, ISO 1133) and weight average molecular weight of 27,000 g/mol, produced by Cheil Industries Inc.
(B) Polycarbonate-polysiloxane copolymer(Si-PC): Tarflon having MI of 27 g/10 min (300°C, 1.2 kgf, ISO 1133), produced by Idemitsu Chemicals
(C1) Siloxane copolyester: TEGOMER H-Si6440P, produced by Evonik Industries
(C2) Polymethylphenylsiloxane: TSF 437 (RI: 1.499, Viscosity (25°C): 22 mm²/S), produced by GE Toshiba
(C3) Polydimethylsiloxane: L-45 (RI: 1.403, Viscosity: 95 cp), NIPPON UNICAR
(C4) Pentaerythrityl tetrastearate: Loxiol P861, produced by Cognis Oleo Chemicals
(D) Impact reinforcing agent
(D1) Impact reinforcing agent including core of 310 nm(average diameter) Polybutadiene and shell of SM/AN =71/29(weight ratio), produced by Cheil Industries Inc.
(D2) Impact reinforcing agent including core of 100 nm(average diameter) Polybutadiene and shell of MMA/SM, produced by R&H

### Examples 1 to 4 and Comparative Examples 1 to 6

The above components were mixed according to compositions listed in Table 1, and 0.3 parts by weight of SAN-capsulated PTFE, 0.3 parts by weight of an antioxidant (Irganox 1076), and 0.2 parts by weight of a lubricant (Luwax E) were added to 100 parts by weight of the resin composition mixture. The mixture was extruded at 240°C using a 45φ biaxial extruding machine while side feeding 11 parts by weight of bisphenol-A bis(diphenyl phosphate) (BDP), and the extruded product was formed into pellets. The pellets were dried at 80°C for 4 hours and then prepared into a specimen using a 6 oz injection molder for property evaluation. Physical properties of the specimen were evaluated as follows, and results are illustrated in Table 1.

### Evaluation of physical properties

### (1) Spiral flow

Each resin was injected into a spiral mold having a thickness of 2 mm and a width of 12.4 mm, followed by measurement of filled distance from the center of the spiral. Here, the cylinder temperature was 270°C and the unit was cm.

### (2) Flammability rating

Flammability was measured using a 1 mm specimen based upon the UL94 standard.

### (3) Notched-IZOD impact strength

Notched-IZOD impact strength was measured using a specimen having a thickness of 1/8" based upon ASTM D256 (unit: kg.cm/cm).

### (4) Mold release properties

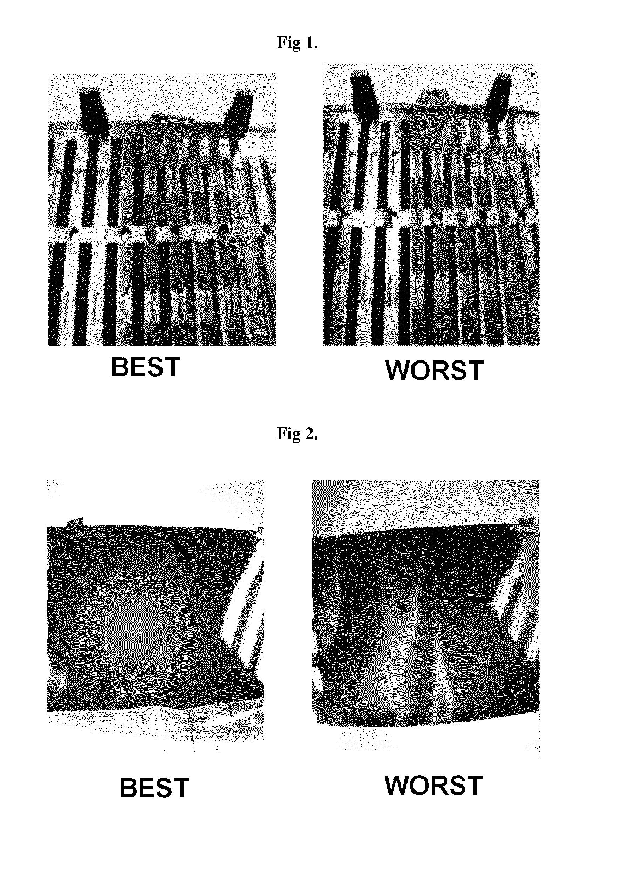

When a grille mold was used, a change in the interval of a grille and an extent to which eject pin marks were changed were evaluated with the naked eye. The best mold release properties and the worst release properties are illustrated in Fig. 1.
5: Best, 4: Good, 3: Moderate, 2: Bad, 1: Worse, 0: Worst

### (5) Appearance

An extent to which pearl marks occurred in a welded part was evaluated with the naked eye. The best appearance and the worst appearance are illustrated in Fig. 1.
5: Best, 4: Good, 3: Moderate, 2: Bad, 1: Worse, 0: Worst

**TABLE 1**

| | Example | | | | Comparative Example | | | | | |
|---|---|---|---|---|---|---|---|---|---|---|
| | 1 | 2 | 3 | 4 | 1 | 2 | 3 | 4 | 5 | 6 |
| (A) | 74 | 72 | 70 | 42 | 68 | 74 | 42 | 74 | 42 | 94 |
| (B) | 20 | 20 | 20 | 50 | 20 | 20 | 50 | 20 | 50 | 0 |
| (C1) | 1 | 3 | 5 | 3 | 7 | - | - | - | - | 1 |
| (C2) | - | - | - | - | - | 1 | 3 | - | - | - |
| (C3) | - | - | - | - | - | - | - | 1 | - | - |
| (C4) | - | - | - | - | - | - | - | - | 3 | - |
| (D1) | 2 | 2 | 2 | 2 | 2 | 2 | 2 | 2 | 2 | 2 |
| (D2) | 3 | 3 | 3 | 3 | 3 | 3 | 3 | 3 | 3 | 3 |
| Spiral flow | 35 | 37 | 40 | 38 | 43 | 36 | 40 | 38 | 41 | 34 |
| Flammability rating | V-0 | V-0 | V-0 | V-0 | V-1 | V-0 | V-1 | V-0 | V-2 | V-0 |
| IZ(1/8") | 37 | 35 | 35 | 38 | 25 | 31 | 20 | 34 | 20 | 37 |
| Mold release properties | 4.0 | 5.0 | 5.0 | 5.0 | 5.0 | 2.0 | 5.0 | 5.0 | 5.0 | 3.0 |
| Appearance | 5.0 | 5.0 | 4.0 | 5.0 | 4.0 | 5.0 | 4.0 | 2.0 | 5.0 | 4.0 |

As shown in Table 1, the resin composition using excessive siloxane copolyester out of the range of the present invention according to Comparative Example 1 has decreased flame retardancy and IZOD properties. The resin compositions using polymethylphenylsiloxane instead of siloxane copolyester according to Comparative Examples 2 and 3 have appearance limitations. The resin composition using PDMS according to Comparative Example 4 also exhibits remarkably deteriorated appearance. The resin composition using an organic release agent according to Comparative Example 5 has excellent mold release properties but remarkably reduces flame retardancy and impact resistance. The resin composition not using the polycarbonate-polysiloxane copolymer according to Comparative Example 6 has deteriorated fluidity, mold release properties, and appearance. That is, when a certain amount of Si-PC(Polycarbonate-polysiloxane copolymer(B)) is used, effects of siloxane copolyester are optimized, which means that interaction between Si-PC and the siloxane copolyester play an important role in expression of physical properties.

Although some embodiments have been disclosed herein, it should be understood by those skilled in the art that these embodiments are provided by way of illustration only, and that various modifications, changes, and alterations can be made without departing from the spirit and scope of the invention. Therefore, the scope of the invention should be limited only by the accompanying claims and equivalents thereof.

## Claims

1. A polycarbonate resin composition having excellent mold release properties and appearance, comprising:
a polycarbonate resin (A);
a polycarbonate-polysiloxane copolymer (B); and
a siloxane copolyester (C),
wherein the siloxane copolyester (C) is present in an amount of 0.1 to 6 % by weight based on the total amount of the composition.

2. The polycarbonate resin composition of claim 1, wherein said siloxane copolyester (C) has a number average molecular weight of 5,500 to 7,500 g/mol, and polyester of the siloxane copolyester has a number average molecular weight of 1,000 to 3,000 g/mol.

3. The polycarbonate resin composition of claim 1 or 2, wherein said siloxane copolyester (C) is an ABA type block copolymer of a polyester block and a polysiloxane block.

4. The polycarbonate resin composition of any of claims 1 to 3, wherein said siloxane copolyester (C) comprises 30 to 70 wt% of a polyester block and 30 to 70 wt% of a polysiloxane block.

5. The polycarbonate resin composition of any of claims 1 to 4, wherein said siloxane copolyester (C) comprises a repeat unit represented by Formula 1: 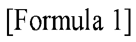 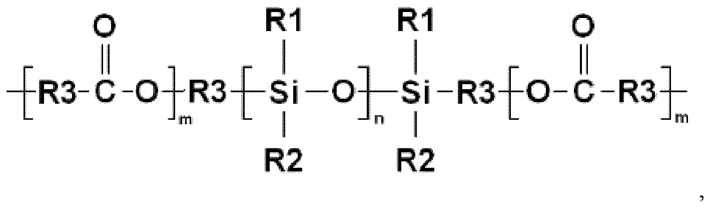 wherein R1 and R2 are the same or different and each are a hydrogen atom, a substituted or unsubstituted C1 to C20 alkyl group, a substituted or unsubstituted C2 to C20 alkenyl group, a substituted or unsubstituted C2 to C20 alkynyl group, a substituted or unsubstituted C1 to C20 alkoxy group, a substituted or unsubstituted C3 to C30 cycloalkyl group, a substituted or unsubstituted C3 to C30 cycloalkenyl group, a substituted or unsubstituted C3 to C30 cycloalkynyl group, a substituted or unsubstituted C6 to C30 aryl group, a substituted or unsubstituted C6 to C30 aryloxy group, or NRR' (R and R' are the same or different and each are a hydrogen atom or a substituted or unsubstituted C1 to C20 alkyl group); R3 is C1 to C10 alkylene or C6 to C20 arylene; n is an integer from 5 to 50; and m is an integer from 5 to 30.

6. The polycarbonate resin composition of any of claims 1 to 5, wherein said composition comprises 40 to 85 wt% of the polycarbonate resin (A), 10 to 55 wt% of the polycarbonate-polysiloxane copolymer (B), and 0.1 to 6 wt% of the siloxane copolyester (C).

7. The polycarbonate resin composition of any of claims 1 to 6, wherein said composition further comprises an impact reinforcing agent.

8. The polycarbonate resin composition of any of claims 1 to 7, wherein said composition further comprises a flame retardant.

9. The polycarbonate resin composition of any of claims 1 to 8, wherein said polycarbonate-polysiloxane copolymer (B) comprises 1 to 99 wt% of a polycarbonate block and 1 to 99 wt% of a polysiloxane block.

10. The polycarbonate resin composition of any of claims 1 to 9, wherein said resin composition further comprises at least one additive selected from the group consisting of impact reinforcing agents, flame retardants, anti-dripping agents, antimicrobial agents, heat stabilizers, antioxidants, release agents, photo-stabilizers, inorganic additives, surfactants, coupling agents, plasticizers, admixtures, stabilizers, lubricants, anti-static agents, a toning agent, a fireproofing agent, a weatherproofing agent, coloring agents, UV absorbents, UV blocking agents, fillers, nucleating agents, adhesion aids, and adhesives.

11. A molded article comprising the polycarbonate resin composition obtainable according to any one of claims 1 to 10.
